# EUROPEAN PATENT SPECIFICATION

(11) **EP 1 004 800 B1**
(45) Date of publication and mention of the grant of the patent: **30.07.2003**
(21) Application number: 98203937.2
(22) Date of filing: 24.11.1998
(51) Int. Cl.: F16H 59/02, B60K 20/02

(54) **Clip-on shifter knob**
Aufsteckbarer Schaltknopf
Rotule du levier de vitesse relevable

(43) Date of publication of application: 31.05.2000
(73) Proprietor: TELEFLEX INCORPORATED, Plymouth Meeting, Pennsylvania 19462 (US)
(72) Inventor: Koning, Henning, 37586 Dassel (DE); McCoy, Stephen, Millbrook, Bedfordshire MK4 32JB (GB)
(74) Representative: Wharton, Peter Robert

(56) References cited:
- EP-A- 0 570 661
- EP-A- 0 667 470
- EP-A- 0 772 112
- FR-A- 2 739 063

## Description

### BACKGROUND OF THE INVENTION

### 1. Field of the Invention

A shift lever for shifting a transmission in an automotive vehicle.

### 2. Description of the Prior Art

As is well known, shifter levers have a knob on the top end for manual grasping in shifting the transmission of the vehicle. In some instances, the end of the lever is knurled and the knob is separately made of organic polymeric or plastic material and forced onto the knurled portion in a friction fit. Alternatively, the knob may be molded directly on the lever. However, in many instances, it is desirable to place the knob on the lever late in the vehicle assembly process and to select the knob from a variety of knob designs. This has been accomplished by machining a metal part and placing it on the top end of the lever, the part being machined in a special configuration to receive a knob.

FR 2 739 063 comprises the features mentioned in the preamble of claim 1.

### SUMMARY OF THE INVENTION AND ADVANTAGES

A shifter as described in the claim 1 for a vehicle transmission wherein a connector cap consisting of an organic polymeric material is molded about the top end of a shifter lever having a top end and a bottom end to define a first snap-on for receiving and mechanically retaining a shifter knob. The connector cap presents a first snap-on for receiving and mechanically retaining a shifter knob.

Accordingly, significant saving can be attained by the subject invention as the requirement for special and relatively expensive machining is eliminated and closer and consistent tolerances are attained in the molding of a plastic connector cap on the top end of the shift lever. The post machining treatments, such as deburring, are also eliminated.

### BRIEF DESCRIPTION OF THE DRAWINGS

Other advantages of the present invention will be readily appreciated as the same becomes better understood by reference to the following detailed description when considered in connection with the accompanying drawings wherein:

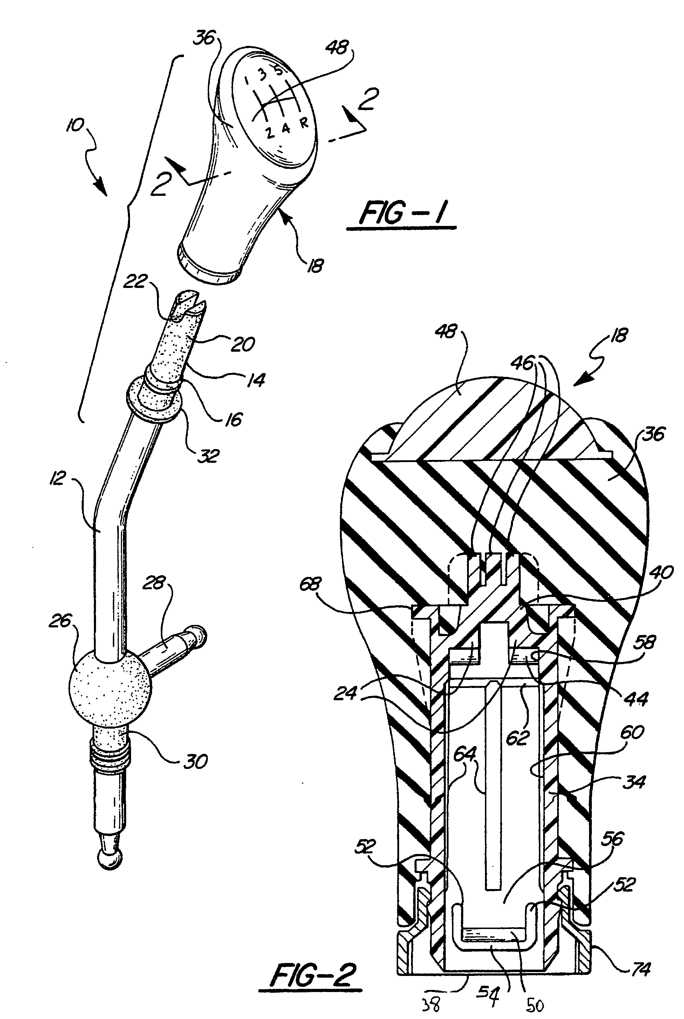

Figure 1 is an exploded perspective view;
Figure 2 is an enlarged cross sectional view of the shifter knob;

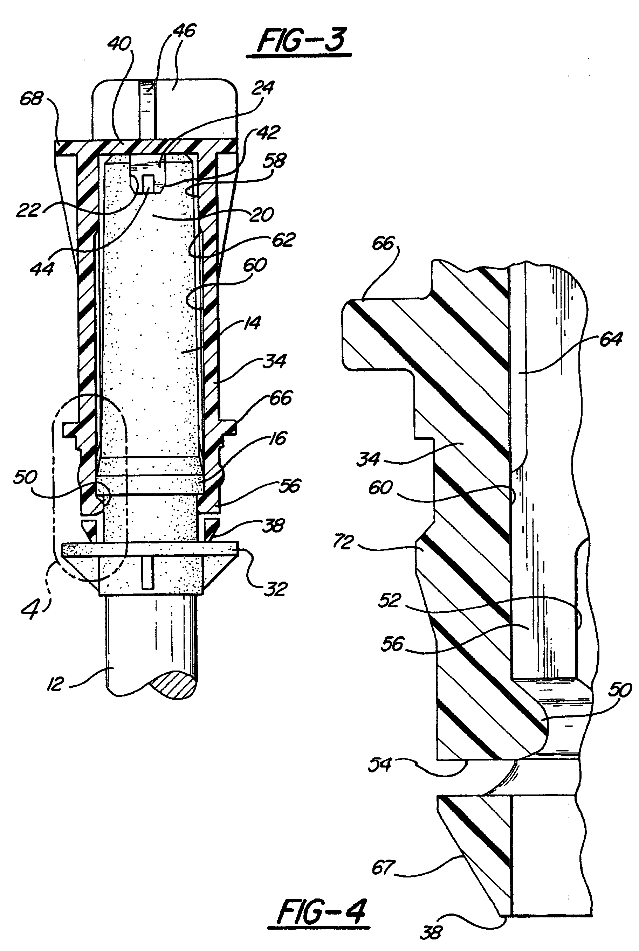

Figure 3 is an enlarged fragmentary view partially in cross section of the sleeve on the lever; and
Figure 4 is an enlarged fragmentary view of the portion in the designated ellipse of Figure 3.

### DETAILED DESCRIPTION OF THE PREFERRED EMBODIMENT

Referring to the Figures, wherein like numerals indicate like or corresponding parts throughout the several views, a shifter for a vehicle transmission is generally shown at **10**.

A shifter lever **12** consists of metal and has a top end and a bottom end and is characterized by a connector cap **14** consisting of an organic polymeric material, i.e., plastic, molded about the top end and including a first snap-on, in the form of an annular bead **16,** for receiving and mechanically retaining a shifter knob, generally indicated at **18.** The connector cap **14** includes a closed upper end **20** disposed over the top end of the lever **12.** A groove **22** of a tongue and groove means is disposed at the upper end **20** for coacting with a complementary tongue **24** of a tongue and groove means on the shifter knob **18** to prevent rotation of a shifter knob **18** once snapped into engagement therewith. The groove **22** extends diametrically across the upper end 20 for receiving the tongue **24** on the shifter knob **18**.

The first snap-on **16** is spaced from the upper end **20** of the connector cap **14** for snapping into engagement with and mechanically retaining the shifter knob **18**. The first snap-on **16** comprises an annular bead which extends angularly or circumferentially about the circumference of the connector cap **14**.

A fulcrum support **26** is disposed on the lever **12** and is spaced from the connector cap **14** closer to the bottom end of the lever **12.** The fulcrum support **26** consists of organic polymeric material and, more specifically, the connector cap **14** and the fulcrum support **26** consist of the same organic polymeric material to facilitate simultaneous molding thereof on the lever **12.** The fulcrum support **26** includes a spherical ball and an arm **28** extends laterally from the spherical ball. A skirt **30** is also molded of organic polymeric material in a cylindrical form below the spherical ball.

The connector cap **14** also includes a boot retainer **32** for retaining a flexible boot (not shown) surrounding the lever **12.**

The shifter knob **18** comprises a retainer sleeve **34** consisting of organic polymeric material and a bulbous bulb **36** is disposed about the sleeve **34.** The sleeve **34** has an inner cylindrical surface and an open sleeve bottom **38** and a closed sleeve top **40** for disposition over the connector cap **14.** The closed sleeve top **40** having an interior and an exterior and the tongue **24** of the complementary tongue and groove means is disposed on the interior of the sleeve top **40** for mechanically engaging the groove **22** in the connector cap **14.** The groove **22** extends diametrically across the upper end **20** and the tongue **24** projects downwardly from and extends diametrically across the interior of the sleeve top **40.** The tongue **24** presents a tapered distal end **42** for facilitating insertion into the groove **22.** The tongue **24** includes a relief **44** for allowing radially inward compression in response to insertion into the groove **22.**

An anti-rotation projection in the form of crossed flanges **46** are disposed on the exterior of the sleeve top **40.** The bulbous knob **36** is foamed about the sleeve **34** and the flanges **46** prevent rotation of the bulbous knob **36.** A decorative insert **48** is embedded in the bulbous knob **36** and serves as an indicator.

The retainer sleeve **34** includes a second snap-on **50,** in the form of a second bead, for snapping into mechanical interlocking engagement with the first snap-on **16**. The second bead **50** extends inwardly on the interior of the sleeve **34.**

The sleeve **34** includes slots **52, 54** defining cantilevered tabs **56** which are flexible and extend to distal ends, the second bead **50** being disposed at the distal ends of the tabs **56** for snapping over the first bead **16.** The slots **52, 54** extend circumferentially **54** to define the distal ends of the tabs **56** and axially **52** to define sides of the tabs **56**.

The inner cylindrical surface of the sleeve **34** has a small diameter **58** adjacent the closed sleeve top **40** and a larger large diameter **60** from the sleeve bottom to the small diameter **58.** A chamfer **62** is disposed between the small **58** and large **60** diameters to facilitate movement of the connector cap **14** into the small diameter **58.** A plurality of ribs **64** extending axially along the large diameter **60** for fictionally engaging the connector cap **14.** The ribs **64** terminate short of the axial slots **52** defining the tabs **56.** The sleeve bottom is conical below the circumferential slots **54,** i.e., tapered **70** inwardly from the circumferential slots **54** to the sleeve bottom **38..**

A top flange **68** extends radially about the sleeve **34** adjacent the sleeve top **40** and a tool flange **66** extending radially about the sleeve below the top flange **68.** The tool flange **66** is formed, mainly, as a result of the configuration of the tooling.

The sleeve **34** presents a shoulder **72** for receiving a cosmetic or decorative part **74** which includes a mating and coacting shoulder for snapping onto the sleeve **34.**

The invention, therefore, includes an improved method of fabricating a shifter for a vehicle transmission comprising the steps of molding a connector cap **14** consisting of an organic polymeric material about the top end of a shifter lever **12** having a top end and a bottom end to define a first snap-on **16** for receiving and mechanically retaining a shifter knob **18.** The method may be more specifically defined as simultaneously molding a fulcrum support **26** on the lever **12** spaced from the connector cap **14** closer to the bottom end of the lever **12** and of the same organic polymeric material as the connector cap **14.**

Obviously, many modifications and variations of the present invention are possible in light of the above teachings as described in the appended claims.

## Claims

1. A shifter for a vehicle transmission comprising;
a shifter lever **(12)** having a top end and a bottom end,
a connector cap **(14)** consisting of an organic polymeric material molded about said top end and including an upper end **(20)** disposed over said top end of said lever **(12)**, a shifter knob (18), and a first snap-on (16) for receiving and mechanically retaining said shifter knob (18), **characterized in that** the connector cap (14) includes a groove **(22)** extending diametrically across and axially into said upper end **(20)** and **in that** the shifter knob **(18)** comprises a retainer sleeve **(34)** consisting of organic polymeric material and a bulbous bulb **(36)** disposed about said sleeve **(34),** said sleeve **(34)** having an inner cylindrical surface and an open sleeve bottom and a closed sleeve top **(40)** for disposition over said connector cap **(14),** said closed sleeve top **(40)** having an interior and an exterior and a tongue **(24)** projecting axially downwardly from and extending diametrically across said interior of said sleeve top **(40)** and presenting a tapered distal end **(41)** for facilitating axial insertion into said groove **(22)** to prevent rotation of a shifter knob **(18)** once snapped into engagement therewith.

2. A shifter as set forth in claim 1 wherein said first snap-on **(16)** is spaced from said upper end **(20)** for snapping into engagement with and mechanically retaining a shifter knob **(18)**.

3. A shifter as set forth in claim 2 wherein said tongue and groove means comprises a groove **(22)** extending diametrically across said upper end **(20)** for receiving a tongue **(24)** on the shifter knob (18).

4. A shifter as set forth in claim 3 wherein said first snap-on **(16)** comprises an annular bead extending about the circumference of said connector cap **(14).**

5. A shifter as set forth in claim 2 including a fulcrum support **(26)** on said lever **(12)** spaced from said connector cap **(14)** closer to said bottom end of said lever **(12).**

6. A shifter as set forth in claim 5 wherein said fulcrum support **(26)** consists of organic polymeric material.

7. A shifter as set forth in claim 6 wherein said connector cap **(14)** and said fulcrum support **(26)** consist of the same organic polymeric material to facilitate simultaneous molding thereof on said lever **(12)**.

8. A shifter as set forth in claim 7 wherein said lever **(12)** consists of metal.

9. A shifter as set forth in claim 7 wherein said fulcrum support **(26)** includes a spherical ball and an arm **(28)** extends laterally from said spherical ball.

10. A shifter as set forth in claim 2 wherein said connector cap **(14)** includes a boot retainer **(30)** for retaining a flexible boot surrounding said lever **(12)**.

11. A shifter as set forth in claim 1 wherein said tongue **(24)** includes a relief **(44)** for allowing radially inward compression in response to insertion into said groove **(22)**.

12. A shifter as set forth in claim 1 including an anti-rotation projection on said exterior of said sleeve top **(40)**.

13. A shifter as set forth in claim 1 wherein said retainer sleeve **(34)** includes a second snap-on (50) for snapping into mechanical interlocking engagement with said first snap-on **(16).**

14. A shifter as set forth in claim 13 wherein said first snap-on **(16)** comprises a first bead on said connector cap **(14)** and said second snap-on **(50)** comprises a second bead extending inwardly on the interior of said sleeve **(34)**.

15. A shifter as set forth in claim 14 wherein said sleeve **(34)** includes slots **(52, 54)** defining cantilevered tabs **(56)** which are flexible and extend to distal ends, said second bead being disposed at said distal ends of said tabs **(56)** for snapping over said first bead.

16. A shifter as set forth in claim 15 wherein said slots **(52, 54)** extend circumferentially **(54)** to define said distal ends of said tabs **(56)** and axially **(52)** to define sides of said tabs **(56)**.

17. A shifter as set forth in claim 16 wherein said cylindrical surface has a small diameter **(58)** adjacent said closed sleeve top **(40)** and a larger large diameter **(60)** from said sleeve bottom to said small diameter **(58)**.

18. A shifter as set forth in claim 17 including a chamfer **(62)** between said small **(58)** and large **(60)** diameters to facilitate movement of said connector cap **(14)** into said small diameter **(58)**.

19. A shifter as set forth in claim 17 including a plurality of ribs **(64)** extending axially along said large diameter **(60)** for fictionally engaging said connector cap **(14)**.

20. A shifter as set forth in claim 19 wherein said ribs (64) terminate short of said axial slots **(52)** defining said tabs **(56).**

21. A shifter as set forth in claim 17 including a flange extending radially about said sleeve (34).

22. A shifter gas set forth in claim 17 wherein said sleeve bottom is conical.

23. A shifter as set forth in claim 17 wherein said sleeve bottom is conical below said circumferential slots **(54)**.

24. A shifter as set forth in claim 17 including a top flange **(68)** extending radially about said sleeve **(34)** adjacent said sleeve top **(40)** and a tool flange **(66)** extending radially about said sleeve **(34)** below said top flange **(68).**

## Patentansprüche

1. Gangschalthebel für Fahrzeuggetrlebe, der folgendes aufweist:
- einen Schalthebel (12), der ein oberes Ende und ein unteres Ende hat,
- eine Verbindungskappe (14), die aus einem organischen Polymer besteht, das um das obere Ende geformt ist und seinerseits ein oberes Ende (20) aufweist, das über dem oberen Ende des Schalthebels (12) angeordnet ist,
- einen Schaltknopf (18), und
- eine erste Schnappeinrichtung (16), um den Schaltknopf (18) aufzunehmen und mechanisch festzuhalten
**dadurch gekennzeichnet,**
- **daß** die Verbindungskappe (14) mit einer Nut (22) versehen ist, die sich diametral durch und axial in das obere Ende (20) erstreckt,
- **daß** der Schalknopf (18) eine Halterungshülse (34), die aus einem organischem Polymer besteht, sowie eine knollenförmige Verdickung (36) aufweist, die um die Hülse (34) herum angeordnet ist,
- **daß** die Hülse (34) eine innere zylindrische Oberfläche und einen offenen Hülsenboden sowie ein geschlossenes Hülsenoberteil (40) zum Anordnen über der Verbindungskappe (14) hat,
- und **daß** das geschlossene Hülsenoberteil (40) einen Innenraum und eine Außenseite sowie eine Zunge (24) hat, die von dem Innenraum der Hülse (40) axial nach unten vorseht und sich diametral durch den Innenraum erstreckt und ein sich verjüngendes distales Ende aufweist, um das axiale Einsetzten in die Nut (22) zu unterstützen, um eine Drehung des Schaltknopfes zu verhindern, sobald einmal ein schnappender Eingriff damit erfolgt ist.

2. Gangschalthebel nach Anspruch 1,
wobei die erste Schnappeinrichtung (16) von dem oberen Ende (20) beabstandet ist, um in Eingriff mit dem Schaltknopf (18) einzuschnappen und ihn mechanisch festzuhalten.

3. Gangschalthebel nach Anspruch 2,
wobei die Zungen- und Nuteinrichtungen eine Nut (22) aufwest, die sich diametral durch das obere Ende (20) erstreckt, um die Zunge (24) an dem Schaltknopf (18) aufzunehmen.

4. Gangschalthebel nach Anspruch 3,
wobei die erste Schnappeinrichtung (16) einen ringförmigen Wulst aufweist, der sich um den Umfang der Verbindungskappe (14) herum erstreckt.

5. Gangschaltung nach Anspruch 2,
der eine Drehpunktabstützung (26) an dem Hebel (12) aufweist, der von der Verbindungskappe (14) näher zum unteren Ende des Hebels (12) hin beabstandet ist.

6. Gangschaltung nach Anspruch 5,
wobei die Drehpunktabstützung (26) aus einem organischen Polymer besteht.

7. Gangschalthebel nach Anspruch 6,
wobei die Verbindungskappe (14) und die Drehpunktabstützung (26) aus dem gleichen organischen Polymer bestehen, um deren gleichzeitiges Anformen an den Hebel zu erleichtern.

8. Gangschalthebel nach Anspruch 7,
wobei der Hebel (12) aus Metall besteht.

9. Gangschalthebel nach Anspruch 7,
wobei die Drehpunktabschützung (26) einen kugelförmigen Ball und einen Arm (28) aufweist, der sich von dem kugelförmigen Ball aus quer erstreckt.

10. Gangschalthebel nach Anspruch 2,
wobei die Verbindungskappe (14) eine Manschettenhalterung (30) aufweist, um eine flexible Manschette festzuhalten, die den Hebel (12) umgibt.

11. Gangschalthebel nach Anspruch 1,
wobei die Zunge (24) eine Aussparung (44) aufweist, die ein Zusammenpressen radial nach innen in Abhängigkeit von dem Einsetzen in die Nut (22) zu ermöglichen.

12. Gangschaltung nach Anspruch 1,
der einen Drehungen verhindernden Vorsprung an der Außenseite des Hülsenvorsprungs (40) aufweist.

13. Gangschalthebel nach Anspruch 1,
wobei die Halterungshülse (34) eine zweite Schnappeinrichtung (50) aufweist, um mit der ersten Schnappeinrichtung (16) in einen mechanisch ineinandergreifenden Eingriff einzuschnappen.

14. Gangschalthebel nach Anspruch 13,
wobei die erste Schnappeinrichtung einen ersten Wulst an der Verbindungskappe (14) aufweist und die zweite Schnappeinrichtung (50) einen zweiten Wulst aufweist, der sich von dem Innenraum der Hülse (34) nach innen erstreckt.

15. Gangschalthebel nach Anspruch 14,
wobei die Hülse (34) Schlitze (52, 54) aufweist, die auskragende Vorsprünge (56) bilden, die flexibel sind und die sich zu distalen Enden erstrecken, und wobei der zweite Wulst an den distalen Enden der Vorsprünge (56) angeordnet ist, um über dem ersten Wulst einzuschnappen.

16. Gangschalthebel nach Anspruch 15,
wobei die Schlitze (52, 54) sich in Unfangsrichtung erstrecken, um die distalen Enden der Vorsprünge (56) zu bilden, und sich in Axialrichtung erstrekken, um die Seiten der Vorsprünge (56) zu bilden.

17. Gangschalthebel nach Anspruch 16,
wobei die zylindrische Oberfläche in der Nähe von dem geschlossenen Hülsenoberteil (40) einen kleinen Durchmesser (58) hat und von dem Hülsenboden bis zum dem kleinen Durchmesser (58) einen größeren, großen Durchmesser (60) besitzt.

18. Gangschalthebel nach Anspruch 17,
der eine Abschrägung (62) zwischen dem kleinen Durchmesser (58) und dem großen Durchmesser (60) aufweist, um die Bewegung der Verbindungskappe In den kleinen Durchmesser (58) hinein zu unterstützen.

19. Gangschalthebel nach Anspruch 17,
eine Vielzahl von Rippen (64) aufweist, die sich axial entlang dem großen Durchmesser (60) erstrecken, um mit der Verbindungskappe (14) in Eingriff zu kommen.

20. Gangschalthebel nach Anspruch 19,
wobei die Rippen kurz vor den axialen Schlitzen (52) enden, die die Vorsprünge (56) bilden.

21. Gangschalthebel nach Anspruch 17,
der einen Flansch aufweist, der sich in radialer Richtung um die Hülse (34) erstreckt.

22. Gangschalthebel nach Anspruch 17,
wobei der Hülsenboden konisch ist.

23. Gangschalthebel nach Anspruch 17,
wobei der Hülsenboden unterhalb der in Unfangsrichtung verlaufenden Schlitze (54) konisch ist.

24. Gangschalthebel nach Anspruch 17,
der einen oberen Flansch (68) der sich radial um die Hülse (34) in der Nähe von dem Hülsenoberteil (40) erstreckt, sowie einen Werkzeugflansch (66) aufweist, der sich unterhalb dem oberen Flansch (68) radial um die Hülse (34) erstreckt.

## Revendications

1. Changement de vitesse pour une transmission de véhicule comprenant:
un levier de changement de vitesse (12) ayant une extrémité supérieure et une extrémité inférieure,
un capuchon connecteur (14) constitué d'un matériau polymère organique moulé autour de ladite extrémité supérieure et comprenant une extrémité supérieure (20) placée sur ladite extrémité supérieure dudit levier (12), un pommeau de changement de vitesse (18), et un premier encliquetage (16) pour recevoir et tenir mécaniquement ledit pommeau de changement de vitesse (18), **caractérisé en ce qu'**une gorge (22) s'étend diamétralement en travers de et axialement dans ladite extrémité supérieure (20) et **en ce que** le pommeau de changement de vitesse (18) comprend un manchon de retenue (34) constitué d'un matériau polymère organique et un bulbe (36) placé autour dudit manchon (34), ledit manchon (34) ayant une surface intérieure cylindrique et un bas de manchon ouvert et un haut de manchon (40) fermé en vue d'un placement sur ledit capuchon connecteur (14), ledit haut de manchon fermé (40) ayant un intérieur et un extérieur et une languette (24) formant saillie axialement vers le bas depuis ledit intérieur dudit haut de manchon (40) et s'étendant diamétralement en travers de celui-ci, et présentant une extrémité distale effilée (41) pour faciliter l'insertion axiale dans ladite rainure (22) afin d'empêcher une rotation du pommeau de changement de vitesse (18) une fois qu'il est enclenché en prise.

2. Changement de vitesse selon la revendication 1, dans lequel ledit premier encliquetage (16) est espacé de ladite extrémité supérieure (20) pour s'enclencher en prise avec un pommeau de changement de vitesse (18) et retenir mécaniquement celui-ci.

3. Changement de vitesse selon la revendication 2, dans lequel lesdits moyens à rainure et languette comprennent une rainure (22) s'étendant diamétralement en travers de ladite extrémité supérieure (20) pour recevoir une languette (24) sur le pommeau de changement de vitesse (18).

4. Changement de vitesse selon la revendication 3, dans lequel ledit premier encliquetage (16) comprend un bourrelet annulaire s'étendant autour de la circonférence dudit capuchon connecteur (14).

5. Changement de vitesse selon la revendication 2, comprenant un support pivotant (26) sur ledit levier (12) espacé dudit capuchon connecteur (14) plus près de ladite extrémité inférieure dudit levier (12).

6. Changement de vitesse selon la revendication 5, dans lequel ledit support pivotant (26) se compose d'un matériau polymère organique.

7. Changement de vitesse selon la revendication 6, dans lequel ledit capuchon connecteur (14) et ledit support pivotant (26) sont composés du même matériau polymère organique afin de faciliter leur moulage simultané sur ledit levier (12).

8. Changement de vitesse selon la revendication 7, dans lequel ledit levier (12) est composé de métal.

9. Changement de vitesse selon la revendication 7, dans lequel ledit support pivotant (26) comprend une boule sphérique et un bras (28) s'étend latéralement depuis ladite boule sphérique.

10. Changement de vitesse selon la revendication 2, dans lequel ledit capuchon connecteur (14) comprend un porte-soufflet (30) pour tenir un soufflet flexible entourant ledit levier (12).

11. Changement de vitesse selon la revendication 1, dans lequel ladite languette (24) comprend un relief (44) pour permettre une compression radiale vers l'intérieur en réaction à l'insertion dans ladite rainure (22).

12. Changement de vitesse selon la revendication 1, comprenant une saillie anti-rotation sur ledit extérieur dudit haut de manchon (40).

13. Changement de vitesse selon la revendication 1, dans lequel ledit manchon de retenue (34) comprend un deuxième encliquetage (50) pour s'enclencher en prise de verrouillage mécanique avec ledit premier encliquetage (16).

14. Changement de vitesse selon la revendication 13, dans lequel ledit premier encliquetage (16) comprend un premier bourrelet sur ledit capuchon connecteur (14) et ledit deuxième encliquetage (50) comprend un deuxième bourrelet s'étendant vers l'intérieur sur l'intérieur dudit manchon (34).

15. Changement de vitesse selon la revendication 14, dans lequel ledit manchon (34) comprend des fentes (52, 54) définissant des pattes en console (56) qui sont flexibles et s'étendant en direction des extrémités distales, ledit deuxième bourrelet étant placé au niveau desdites extrémités distales desdits pattes (56) pour s'enclencher par-dessus ledit premier bourrelet.

16. Changement de vitesse selon la revendication 15, dans lequel lesdites fentes (52, 54) s'étendent circonférentiellement (54) pour définir lesdites extrémités distales desdites pattes (56) et axialement (52) pour définir des côtés desdites pattes (56).

17. Changement de vitesse selon la revendication 16, dans lequel ladite surface cylindrique a un petit diamètre (58) près dudit haut de manchon fermé (40) et un grand diamètre (60) plus grand dudit bas de manchon audit petit diamètre (58).

18. Changement de vitesse selon la revendication 17, comprenant un chanfrein (62) entre lesdits petit (58) et grand (60) diamètres pour faciliter le mouvement dudit capuchon connecteur (14) dans ledit petit diamètre (58).

19. Changement de vitesse selon la revendication 17, comprenant une pluralité de membrures (64) s'étendant axialement le long dudit grand diamètre (60) pour mettre en prise de friction ledit capuchon connecteur (14).

20. Changement de vitesse selon la revendication 19, dans lequel lesdites membrures (64) se terminent peu avant lesdites fentes axiales (52) définissant lesdites pattes (56).

21. Changement de vitesse selon la revendication 17, comprenant une bride s'étendant radialement autour dudit manchon (34).

22. Changement de vitesse selon la revendication 17, dans lequel ledit bas de manchon est conique.

23. Changement de vitesse selon la revendication 17, dans lequel ledit bas de manchon est conique au-dessous desdites fentes circonférentielles (54).

24. Changement de vitesse selon la revendication 17, comprenant une bride supérieure (68) s'étendant radialement autour dudit manchon (34) près dudit haut de manchon (40) et une bride porte-outil (66) s'étendant radialement autour dudit manchon (34) au-dessous de ladite bride supérieure (68).
